# EUROPÄISCHE PATENTSCHRIFT

(11) **EP 2 793 066 B1**
(45) Veröffentlichungstag und Bekanntmachung des Hinweises auf die Patenterteilung: **09.03.2022**
(21) Anmeldenummer: 14164008.6
(22) Anmeldetag: 09.04.2014
(51) Int. Cl.: G02B 21/08

(54) **Ringbeleuchtungsvorrichtung für ein Mikroskopobjektiv und Mikroskopobjektiv**
Ring illumination device for a microscope lens and microscope lens
Dispositif d'éclairage circulaire pour un objectif de microscope et objectif de microscope

(30) Priorität: 19.04.2013 DE 102013006995
(43) Veröffentlichungstag der Anmeldung: 22.10.2014
(73) Patentinhaber: Carl Zeiss Microscopy GmbH, 07745 Jena (DE)
(72) Erfinder: Fahlbusch, Ingo, 37077 Göttingen (DE); Buchheister, Jan, 07751 Jena (DE); Herbst, Georg, 37085 Göttingen (DE); Funck, Max, 14482 Potsdam (DE); Wolf, Uwe, 99441 Magdala (DE)
(74) Vertreter: Müller, Silke

(56) Entgegenhaltungen:
- EP-A2- 2 128 679
- WO-A1-97/16024
- CN-B- 101 414 056
- JP-A- 2011 013 325

## Beschreibung

Die Erfindung betrifft eine Ringbeleuchtungsvorrichtung für ein Objektiv, insbesondere für ein Mikroskopobjektiv und ein Mikroskopobjektiv mit einer solchen Ringbeleuchtungsvorrichtung.

Aus dem Stand der Technik sind verschiedene Beleuchtungseinrichtungen und Beleuchtungstechnologien für Mikroskope bekannt. Ringbeleuchtungen werden vorwiegend zur Dunkelfeld-Auflichtbeleuchtung verwendet. Bekannte Systeme sind außerhalb der abbildenden Optik des Objektivs angeordnet. Das Licht wird dabei meist durch einen Ringspiegel oder ringförmige Linsen auf die Probe gelenkt. Die Konstruktionen sind meist sehr aufwändig und haben einen großen Platzbedarf außerhalb des Objektivs, was beispielsweisen den Schwenkradius des Objektivs erheblich einschränken kann.

In der US 4 186 993 A ist beispielsweise ein Objektiv beschrieben, bei dem um die abbildende Optik herum in Lichtausbreitungsrichtung ein ringförmiger transparenter Diffusor und eine ringförmige Kondensorlinse angeordnet sind.

In US 4 626 079 A werden mehrere Varianten einer DunkelfeldBeleuchtung gezeigt, bei der um die Objektivlinsen eine Kombination von ringförmigen Linsen und/oder ringförmigen Spiegeln verwendet wird.

Die DE 603 030 328 T2 zeigt eine ringförmige Beleuchtungseinrichtung für Mikroskope, bei der LED's als Lichtquellen verwendet werden. Es werden zwei oder drei Typen LED's mit unterschiedlichen Emissionsfarben, vorzugsweise rot, grün, blau verwendet, die jeweils in der gleichen Ebene um die optische Achse herum und im Wesentlichen senkrecht zur optischen Achse angeordnet sind. Über dichroitische Spiegelgruppen werden die Farbanteile gemischt und mittels eines Reflektors zur Objektebene umgelenkt.

Aus der DE 20 2005 004 635 U1 ist ein Beleuchtungsring für ein Auflichtmikroskop bekannt, der wenigstens zwei beweglich gelagerte LED's aufweist, deren Anstellwinkel relativ zur optischen Achse im Sinne einer Fokussierung der Beleuchtung verstellbar ist. Aufgrund der thermischen Empfindlichkeit werden die LED's mit maximal der halben zulässigen Stromstärke betrieben und die erforderliche Lichtstärke durch die Fokussierung oder die Anzahl der eingesetzten LED's erreicht. Die Kontaktierung und Stromzuführung der LED's sind relativ aufwändig.

Aus der CN 101414056 B ist ein Objektiv mit einer Dunkelfeld-Beleuchtungsvorrichtung bekannt. Die Bildgebungsoptik des Objektives ist in einem inneren Zylinder angeordnet, während eine LED-Beleuchtungseinrichtung in einem äußeren Zylinder vorgesehen ist. Zwischen den LED's und dem Objekt ist ein ringförmiges optisches Element vorgesehen, das das LED-Licht in paralleles Licht transformiert. Die Beleuchtungsvorrichtung kann mit einem entsprechenden Adapter auch an ein Hellfeld-Objektiv gekoppelt werden.

Aus der WO 97/16024 und EP 2 128 679 A2 sind Ringbeleuchtungsvorrichtungen bekannt, bei denen eine aktive Kühlung der LED's mittels eines Gebläses vorgeschlagen wird. Die Kühlluft wird dem Ringlicht jeweils über einen Schlauch zugeführt.

In der JP 2011 013325 A ist eine Ringbeleuchtungseinrichtung beschrieben, die am Mikroskopkörper derart befestigt, ist, dass sie das Mikroskopobjektiv umschließt. Eine Lüftkühlung der LED's wird erreicht, indem die Ringbeleuchtungseinrichtung am oberen Ende Lüftungsöffnungen aufweist und zwischen dem Objektivgehäuse und dem Diffusor der Beleuchtungseinrichtung eine Lücke besteht.

Die Helligkeit einer LED wächst mit der Leistungsaufnahme. Bei konstanter Halbleitertemperatur ist die Zunahme annähernd proportional. Der Wirkungsgrad sinkt aber mit steigender Temperatur, deshalb sinkt die Lichtausbeute an der Leistungsgrenze je nach Art der Kühlung ab. Eine effektive Kühlung ist also für die Effizienz der Beleuchtung essentiell.

Daher wäre es wünschenswert, die Kühlung der LED's bei einfacher Montage der Ringbeleuchtungseinrichtung noch weiter zu verbessern Der Erfindung liegt daher die Aufgabe zugrunde, eine Ringbeleuchtung zur Auflichtbeleuchtung für ein Mikroskopobjektiv und ein Mikroskopobjektiv mit einer solchen Beleuchtung zu schaffen, das eine Dunkelfeldbeleuchtung mit hoher Lichtausbeute und Effizienz erlaubt, einfach montierbar und wartungsarm ist.

Die Aufgabe wird mit einer Ringbeleuchtungsvorrichtung nach Anspruch 1 und mit einem Mikroskopobjektiv mit einer solchen Beleuchtung nach Anspruch 8 gelöst.

Vorteilhafte Ausführungsformen sind in den Unteransprüchen angegeben.

Eine erfindungsgemäße Ringbeleuchtungsvorrichtung umfasst mindestens zwei Leuchtdioden-Einheiten, die in einem Beleuchtungsring angeordnet sind. Die Leuchtdioden-Einheiten umfassen zumindest eine Leuchtdiode und eine Kollektoroptik und sind vorzugsweise gleichmäßig über den Umfang des Beleuchtungsringes verteilt angeordnet. Die Leuchtdioden-Einheiten sind dabei im Beleuchtungsring so positioniert, dass, ein rechteckiger Kamerachip effizient und ohne besonders störende Aufhellungen die aus der Objektebene reflektierten bildgebenden Strahlen aufnehmen kann.

Die Ringbeleuchtungsvorrichtung weist eine untere Eintrittsöffnung und eine obere Austrittsöffnung für Kühlluft auf. Durch diese Konstruktion ist die Beleuchtungsvorrichtung selbstkühlend. Die selbstkühlende Wirkung wird durch einen Kamineffekt im Beleuchtungsring erzeugt und mit steigender Erwärmung der Bauteile noch verstärkt. Die Kühlung der Bauteile erfolgt dadurch, dass an allen Bauteilen, die sich erwärmen können, aufsteigende kühle Luft vorbeistreicht, sich dabei weiter erwärmt und kühle Luft durch die Eintrittsöffnung nachströmt. Dazu sind im Beleuchtungsring eine zweite Eintrittsöffnung und eine zweite Austrittsöffnung für die Kühlluft vorgesehen.

Die Vorteile der Erfindung sind insbesondere darin zu sehen, dass die Leuchtdioden mit hoher Leistungsaufnahme betrieben werden können, was eine gute Helligkeit und Effizienz der Beleuchtung ergibt.

Vorteilhaftweise sind die Komponenten der Beleuchtungsvorrichtung aus gut wärmeleitenden Materialien gefertigt.

Ein erfindungsgemäßes Mikroskopobjektiv umfasst eine bildgebende Optik, die in einem inneren Fassungsrohr angeordnet ist. In einer, das Fassungsrohr zumindest abschnittsweise umschließenden äußeren Objektivhülse sind in bekannter Weise Objektivfunktionalitäten, wie beispielsweise elektrische Steuereinheiten, Innenfokussierung, Kollisionsschutz, Temperierung und Motorisierung usw. untergebracht. An der, eine Frontlinse tragenden Stirnseite des Objektivs ist die Beleuchtungsvorrichtung elektrisch und mechanisch mit der Hülse gekoppelt. Dabei trägt der Beleuchtungsring eine elektronische Schnittstelle, vorzugsweise in Form einer Kontaktfläche, je Leuchtdioden-Einheit. Über diese elektronische Schnittstelle ist die Beleuchtungsvorrichtung ansteuerbar und vorzugsweise auch einstellbar. Besonders vorteilhaft ist es, wenn die Leuchtdioden-Einheiten mittels eines Softwaretools und eines Eichnormals aufeinander abstimmbar sind, um ein gleichmäßig ausgeleuchtetes Objektfeld immer sicherzustellen, beispielsweise auch bei unterschiedlich schnell alternden Leuchtdioden.

Bei hohen Arbeitsabständen zwischen Objektiv und Objektebene besteht die Gefahr, dass Licht von den Leuchtdioden vom Objekt direkt ins Objektiv reflektiert wird und somit unerwünschte Bildstörungen hervorruft. Dieser Umstand kann mit Hilfe einer Umlenkung des Beleuchtungsstrahlenganges nach außen und dann zur Objektebene hin behoben werden. Zu diesem Zweck kann das Mikroskopobjektiv in einer weiteren Ausführungsform einen Korrekturaufsatz umfassen, der das Licht der Leuchtdioden-Einheiten nach außen und dort auf einen Ringspiegel reflektiert, wodurch ein flacherer Einstrahlwinkel der Beleuchtung erreicht wird. Der Korrekturaufsatz ist mit dem Objektiv zentriert und vorteilhafterweise mit magnetischen Mitteln an das Objektiv bzw. an die Beleuchtungsvorrichtung koppelbar. Durch die Anordnung der Magnete am Objektiv und am Korrekturaufsatz wird sichergestellt, dass die untere Eintrittsöffnung der Beleuchtungsvorrichtung deckungsgleich zu den Kollektoren positioniert ist.

Die Leuchtdioden-Einheit umfasst die vorzugsweise auf einer Platine angeordnete LED und eine Kollektoroptik zur Abbildung der Lichtquelle in der Objektebene, sowie eine Kontaktfläche als elektronische Schnittstelle. Dadurch ist eine so genannte "kritische" Beleuchtung dimensioniert, bei der die Optik vergleichsweise einfach ausgeführt werden kann.

Die Leuchtdioden-Einheiten sind in Kollektoren angeordnet, die in besonders einfacher Weise vorjustiert werden können. Um eine effektive Kühlung sicherzustellen, weisen die Kollektoren jeweils eine dritte Eintrittsöffnung und eine dritte Austrittsöffnung für Kühlluft auf.

Der Beleuchtungsring nimmt vorzugsweise in einem entsprechenden Lochkreis die fertig vorjustierten Kollektoren auf, wobei die Eintrittsöffnungen und die Austrittsöffnungen so angeordnet sind, dass der Kühlluftstrom den Beleuchtungsring von unten nach oben durchdringt. Die Eintrittsöffnungen und Austrittsöffnungen der Kollektoren und des Beleuchtungsringes sind dazu vorzugsweise einander überdeckend vorgesehen.

In einer besonders bevorzugten Ausführungsform sind acht Kollektoren in einem Beleuchtungsring über dessen Umfang verteilt aufgenommen.

Der Kollektor umfasst dabei ein Kollektorgehäuse, das die Kollektoroptik aufnimmt, eine LED-Platine, einen Kühlkörper und eine Kontaktplatine mit den/den Kontaktfläche/n als elektronische Schnittstelle, wobei die LED-Platine und die Kontaktplatine mittels Drähten, die als Leiter dienen, verbunden sind.

Der Beleuchtungsring wird mit dem Objektiv in einer optischen Achse zentriert.

Eine bevorzugte Ausführungsform der Erfindung wird nachfolgend anhand der Figuren näher erläutert.

Es zeigen:
- Fig. 1:: eine bevorzugte Ausführungsform eines Mikroskopobjektivs mit einer Ringbeleuchtungsvorrichtung in einer Längsschnittdarstellung;
- Fig. 2:: eine Detailansicht aus Fig. 1, die die Ringbeleuchtungsvorrichtung zeigt;
- Fig. 3:: eine Ansicht des in Fig. 1 dargestellten Mikroskopobjektives aus Richtung einer Objektebene;
- Fig. 4:: verschiedene Ansichten eines Kollektors;
- Fig. 5:: eine Längsschnittdarstellung des in Fig. 4 gezeigten Kollektors entlang der Schnittlinie A-A in Fig 4;
- Fig. 6:: eine Längsschnittdarstellung des in Fig. 4 gezeigten Kollektors entlang der Schnittlinie B-B in Fig. 4;
- Fig. 7:: einen Korrekturaufsatz in einer Schnittdarstellung.

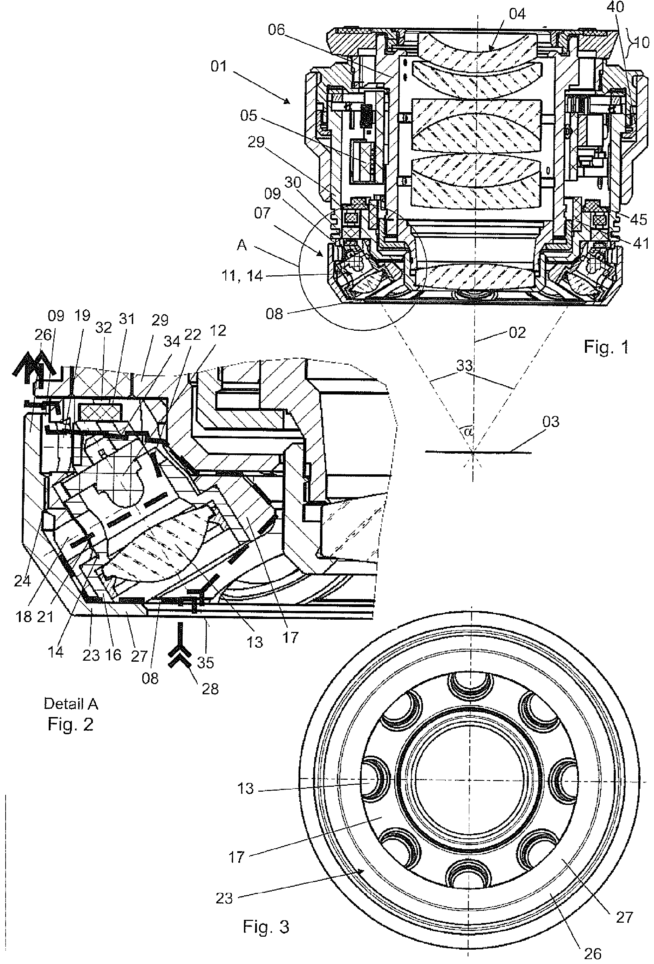

In Fig. 1 ist eine bevorzugte Ausführungsform eines erfindungsgemäßen Mikroskopobjektivs 01 in einer Längsschnittdarstellung entlang einer optischen Achse 02 gezeigt. In Fig. 2 ist Detail A aus Fig. 1 gezeigt. Fig. 3 zeigt eine Ansicht des in Fig. 1 dargestellten Mikroskopobjektivs 01 aus Richtung einer Objektebene 03.

Das Mikroskopobjektiv 01 umfasst zunächst in bekannter Weise eine bildgebende Optikbaugruppe 04, die in einem inneren Objektivrohr 06 angeordnet ist.

Anhand der Figuren 1 bis 3 wird nachfolgend die dargestellte bevorzugte Ausführungsform des erfindungsgemäßen Mikroskopobjektivs 01 näher erläutert.

An der, der Objektebene 03 zugewandten Seite des Mikroskopobjektivs 01 ist eine Ringbeleuchtungsvorrichtung 07 befestigt.

Die Ringbeleuchtungsvorrichtung 07 weist eine untere Eintrittsöffnung 08 und eine obere Austrittsöffnung 09 für Kühlluft auf. In dieser Ausführungsform sind die Eintrittsöffnung 08 und die Austrittsöffnung 09 ringförmig. Die Kühlluft umströmt dabei die sich beim Betrieb der Ringbeleuchtungsvorrichtung erwärmenden Komponenten unter Erzeugung eines Kamineffektes.

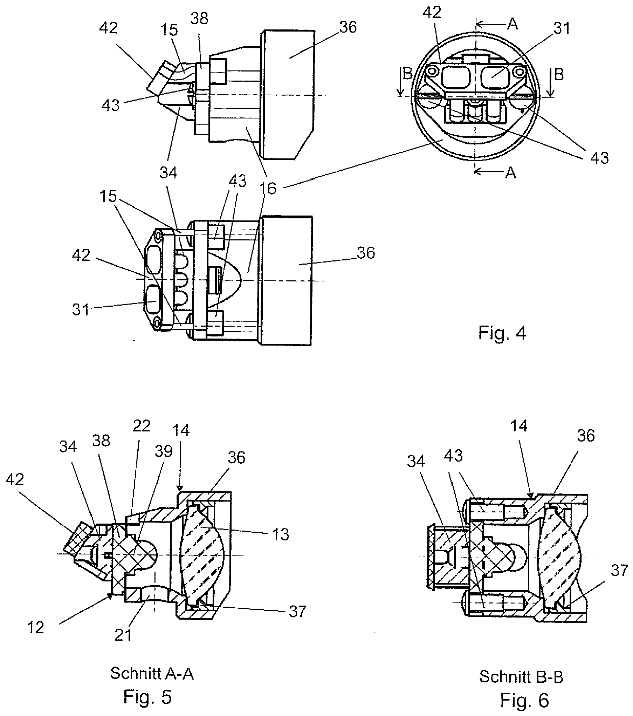

Leuchtdioden-Einheiten 11 umfassen jeweils eine LED-Baugruppe 12 und eine Kollektorlinse 13, welche in dieser Ausführungsform gemeinsam in einem Kollektor 14 gehalten sind. Die Kollektoren 14 umfassen ein Kollektorgehäuse 16 und sind mit diesem in einem Beleuchtungsring 17 angeordnet und bei Bedarf (z. B. Alterung oder Defekt) einfach austauschbar. Der Aufbau des Kollektors 14 wird später anhand der Figuren 4, 5 und 6 ausführlicher erläutert.

Um den kühlenden Kamineffekt bei dieser Ausführungsform zu erreichen, sind im Beleuchtungsring 17 jeweils eine zweite Eintrittsöffnung 18 und eine zweite Austrittsöffnung 19 angeordnet und im Kollektorgehäuse 16 eine dritte Eintrittsöffnung 21 und eine dritte Austrittsöffnung 22 vorgesehen.

Ein Vorschraubring 23 ist vorzugsweise mittels eines Gewindes 24 am Beleuchtungsring 17 befestigt. Das Gewinde 24 ist an einem axialen Abschnitt 26 des Vorschraubringes 23 angeordnet. Der axiale Abschnitt 26 überdeckt dabei die zweite Austrittöffnung 19 am Außendurchmesser des Beleuchtungsringes 17 bis auf den Spalt der oberen Austrittsöffnung 09. Dadurch wird verhindert, dass ein Bediener den wärmeren Teil des Beleuchtungsringes 17 berühren kann.

Ein radialer Abschnitt 27 des Vorschraubringes dient als axiale Sicherung und Fixierung des Kollektors 14 im Beleuchtungsring 17.

Mit dem Pfeil 28 ist der Kühlluftstrom von der unteren Eintrittsöffnung 08 zur oberen Austrittsöffnung 09 dargestellt. Selbstverständlich strömt die Luft um die geschnitten dargestellten Komponenten herum. Der Fachmann wird erkennen, dass weitere, hier nicht dargestellte Teilkühlluftströme entstehen.

Der Beleuchtungsring 17 ist vorzugsweise mit nicht dargestellten Schraubverbindungen, die in Umfangsrichtung zwischen den Kollektoren 14 vorgesehen sind, mit einer Objektivhülse 29 verbunden. Die Objektivhülse 29 beinhaltet vorzugsweise weitere Funktionalitäten des Objektives, unter anderem eine Steuereinheit 10 für das Mikroskopobjektiv 01 und die Ringbeleuchtungsvorrichtung 07 oder zumindest die Anschlusskomponenten für eine solche. Die Objektivhülse 29 weist vorteilhafterweise Kühlrippen 30 auf. Zusätzlich kann es vorteilhaft sein, wenn in die Objektivhülse 29 eine Isolationshülse 41 eingearbeitet ist, die verhindert, dass Wärme durch mechanische Anlageflächen an die innere Optikbaugruppe 04 weiter geleitet werden kann. Zusätzlich kann die Objektivhülse 29 über einen weiteren Vorschraubring 40 in der optischen Achse 02 höhenverstellt werden. Dadurch können Höhenschwankungen durch das Justieren des optischen Systems ausgeglichen werden und die Beleuchtung kann immer in den Fokus, in die Objektebene 03 abgebildet werden.

Jeder der Kollektoren 14 ist mittels mindestens einer Kontaktfläche 31 mit einer Kontaktfeder 32, die in der Objektivhülse 29 gelagert ist, elektrisch verbunden. Über diese Kontakte 31, 32 ist eine elektronische Schnittstelle zwischen der Steuereinheit des Objektivs 05 und der Ringbeleuchtungsvorrichtung 07 realisiert. Dabei sind die Kontaktfedern 32 in eine vorteilhaft ringförmig ausgestaltete Flachbaugruppe (FBG) 45 eingelötet. Die FBG 45 ist mit der Steuereinheit des Objektivs 05 verbunden. Die Steuereinheit in das Objektiv zu integrieren bietet den Vorteil, weniger elektronische Leitungen zur Steuereinheit im Mikroskop zur Verfügung stellen zu müssen. Die Steuereinheit des Objektivs 05 selbst ist nun über elektrische Leitungen mit einer elektronischen Hauptschnittstelle 10 des Mikroskopobjektivs 01 verbunden. Die elektronische Hauptschnittstelle 10 des Mikroskopobjektivs 01 bildet dann den Übergang für die Signale vom Mikroskopobjektiv 01 in das Mikroskop und somit in eine Steuerzentrale.

Die Kollektoren 14 sind im Beleuchtungsring 17 derart geneigt angeordnet, dass ein Beleuchtungsstrahlengang 33 die LED-Baugruppen 12 in der Objektebene 03 abbildet. Der Winkel α ergibt sich aus dem freien Arbeitsabstand des Mikroskopobjektivs 01 und dem gewählten Lochkreis, in dem die Kollektoren 14 im Beleuchtungsring 17 angeordnet sind. Über einen im Kollektor 14 vorgesehenen Kühlkörper 34 wird eine bevorzugte Umlenkung der Kollektorachse 35 erzeugt. In dieser Lösung ist die Umlenkung so gewählt, dass die Kontaktflächen 31 parallel zur Objektebene stehen. Das bietet zusätzlich den Vorteil des kleineren Bauraums des Mikroskopojektivs 01, also einen kleineren Außendurchmesser.

Der in der in den Figuren 1 bis 3 dargestellten bevorzugten Ausführungsform des Mikroskopobjektivs 01 verwendete Kollektor 14 ist in den Figuren 4 bis 6 im Detail dargestellt.

Dabei zeigt Fig. 4 verschiedene Ansichten des Kollektors 14. In Fig. 5 ist eine Schnittdarstellung entlang der Schnittlinie A-A in Fig. 4, in Fig. 6 eine Schnittdarstellung entlang der Schnittlinie B-B in Fig. 4 gezeigt. Gleiche Bezugsziffern werden entsprechend der vorherigen Beschreibung für gleiche Teile verwendet.

Das Kollektorgehäuse 16 weist einen zylindrischen Abschnitt 36 zur Aufnahme der Kollektorlinse 13 auf. Die Kollektorlinse 13 ist mittels eines Halteringes 37 im Kollektorgehäuse 14 fixiert.

Die LED-Baugruppe 12 umfasst eine Platine 38 mit einer LED 39, hier als Leuchtdiode in einem SMD-Keramik Gehäuse mit Silikonverguss und Linse ausgeführt, den Kühlkörper 34 und eine Kontaktplatine 42 mit der Kontaktfläche 31. Die elektrische Verbindung zwischen der Kontaktplatine 42 und der Platine 38 erfolgt über eingelötete Leiterdrähte 15. Der Fachmann kann die richtige Leuchtdiode anhand der geforderten Charakteristika auswählen und den Kühlkörper entsprechend der Erfordernisse dimensionieren.

Die LED-Baugruppe 12 ist mittels Schrauben 43 auf der der Kollektorlinse 13 abgewandten Stirnseite des Kollektorgehäuses 16 befestigt und gleichzeitig dort zentriert. Über diese Schraubverbindung erfolgt die Justage des Kollektors 14 auf die Beleuchtungsachse 33. Vorteilhaft ist es, den genauen Abstand zwischen LED 39 und Kollektorlinse 13 über mechanische Toleranzen des Kollektorgehäuses 16 zu realisieren. Es können alternativ wärmeleitende Abstandsringe verwendet werden. Vorteilhafterweise ist die Platine 38 und die Schraubverbindung gut wärmeleitend dimensioniert, damit die Wärme der LED 39 außer über den Kühlkörper 34 auch über die Platine 38 und die Schraubverbindung an das Kollektorgehäuse 16 und dann an den Beleuchtungsring 17 abgegeben werden kann. Zusätzlich ist es vorteilhaft, zwischen der LED-Baugruppe 12 und der Kontaktplatine 42 einen Wärmeleitkleber einzusetzen. Dadurch ist ein besserer Wärmeübergang gegeben und gleichzeitig eine unlösbare Fixierung als zusätzliche Sicherung der Justierung vorhanden.

Das Kollektorgehäuse 16, der Beleuchtungsring 17 und die Objektivhülse 29 sind aus gut wärmeleitendem Material, wie beispielsweise Aluminiumguss hergestellt.

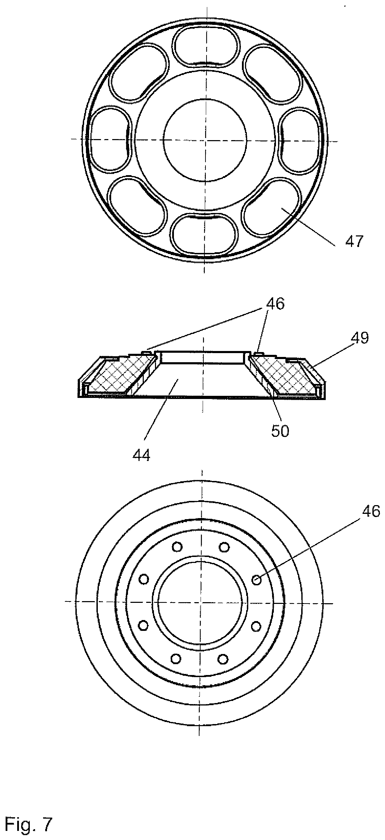

Fig. 7 zeigt einen Korrekturaufsatz 44, der bei großen Arbeitsabständen des Objektivs zur Objektebene einen flacheren Einstrahlwinkel erzeugt. Der Korrekturaufsatz ist vorteilhafterweise mittels über den Umfang verteilten Dauermagneten 46 am Beleuchtungsring befestigt. Die Dauermagneten 46 im Korrekturaufsatz 44 sind im Versatz zu den Strahlöffnungen 47 angeordnet. Das Mikroskopobjektiv 01 erhält im Beleuchtungsring an entsprechend korrespondierenden Positionen ebenfalls Magnete. Damit wird eine Ausrichtung der Strahlöffnungen 47 mit den Kollektoren 14 gewährleistet. Die Zentrierung des Korrekturaufsatzes 46 erfolgt über einen Zentrierzylinder 48. Fassungselemente 49 und 50 dienen hier vorteilhaft dem Schutz der Spiegelflächen.

Die Funktionsweise eines solchen umlenkenden Aufsatzes ist dem Fachmann beispielsweise aus DE 103 205 29 A1 bekannt.

**Bezugszeichenliste**

| | | | |
|---|---|---|---|
| 01 | Mikroskopobjektiv | 30 | Kühlrippen |
| 02 | Optische Achse | 31 | Kontaktfläche |
| 03 | Objektebene | 32 | Kontaktfeder |
| 04 | Optikbaugruppe | 33 | Beleuchtungsstrahlengang |
| 05 | Steuereinheit | 34 | Kühlkörper |
| 06 | Objektivrohr | 35 | Kollekorachse |
| 07 | Ringbeleuchtungsvorrichtung | 36 | zylindrischer Abschnitt |
| | | 37 | Haltering |
| 08 | Untere Eintrittsöffnung | 38 | Platine |
| 09 | Obere Austrittsöffnung | 39 | LED |
| 10 | elektronische Hauptschnittstelle | 40 | Vorschraubring |
| | | 41 | Isolationsring |
| 11 | Leuchtdioden-Einheit | 42 | Kontaktplatine |
| 12 | LED-Baugruppe | 43 | Schraube |
| 13 | Kollektorlinse | 44 | Korrekturaufsatz |
| 14 | Kollektor | 45 | Flachbaugruppe |
| 15 | Leiterdrähte | 46 | Dauermagneten |
| 16 | Kollektorgehäuse | 47 | Strahlöffnung |
| 17 | Beleuchtungsring | 48 | Zentrierzylinder |
| 18 | zweite Eintrittsöffnung | 49 | Fassungselement |
| 19 | zweite Austrittsöffnung | 50 | Fassungselement mit Strahlöffnungen |
| 20 | - | | |
| 21 | dritte Eintrittsöffnung | | |
| 22 | dritte Austrittsöffnung | | |
| 23 | Vorschraubring | | |
| 24 | Gewinde | | |
| 25 | - | | |
| 26 | axialer Abschnitt | | |
| 27 | radialer Abschnitt | | |
| 28 | Kühlluftstrom | | |
| 29 | Objektivhülse | | |

## Patentansprüche

1. Ringbeleuchtungsvorrichtung (07) für ein Mikroskopobjektiv (01) umfassend mindestens zwei Leuchtdioden-Einheiten (11), die in einem Beleuchtungsring (17) aufgenommen sind, wobei die Ringbeleuchtungsvorrichtung (07) mindestens eine untere Eintrittsöffnung (08) und mindestens eine obere Austrittsöffnung (09) für Kühlluft zum Kühlen der Leuchtdioden-Einheiten (12) aufweist, **dadurch gekennzeichnet, dass** der Beleuchtungsring (17) eine zweite Eintrittsöffnung (18) und eine zweite Austrittsöffnung (19) aufweist, und, dass die Leuchtdioden-Einheiten (11) jeweils in einem, im Beleuchtungsring (17) gehaltenen Kollektorgehäuse (16) angeordnet sind, wobei das Kollektorgehäuse (16) eine dritte Eintrittsöffnung (21) und eine dritte Austrittsöffnung (22) aufweist.

2. Ringbeleuchtungsvorrichtung (07) nach Anspruch 1, wobei das Kollektorgehäuse (16) im wesentlichen zylinderförmig ist, wobei an einem Boden der Zylinderform eine Kollektorlinse (13) angeordnet ist und wobei die dritte Eintrittsöffnung (21) an einer Mantelfläche der Zylinderform und die dritte Austrittsöffnung (22) an einem Deckel der Zylinderform vorgesehen sind.

3. Ringbeleuchtungsvorrichtung (07) nach einem der Ansprüche 1 bis 2, wobei die Leuchtdioden-Einheit (11) einen Kühlkörper (34) umfasst.

4. Ringbeleuchtungsvorrichtung (07) nach einem der Ansprüche 1 bis 3, die weiterhin einen Abdeckring (23) zur Halterung der Leuchtdioden-Einheiten (11) im Beleuchtungsring (17) umfasst, wobei der Abdeckring (23) den Beleuchtungsring (17) zumindest abschnittsweise umgibt und einen axialen Rand (26) und einen radialen Rand (27) aufweist.

5. Ringbeleuchtungsvorrichtung (07) nach Anspruch 4, wobei der axiale Rand (26) in Richtung Objektiverstreckung über die zweite Austrittsöffnung (19) des Beleuchtungsringes (17) hinausragt, jedoch zwischen Abdeckring (23) und Beleuchtungsring (17) im Bereich der oberen Austrittsöffnung (09) ein radialer Abstand besteht, der die obere Austrittsöffnung (09) bildet.

6. Ringbeleuchtungsvorrichtung (07) nach einem der Ansprüche 1 bis 5, wobei die Leuchtdioden-Einheiten (11) eine elektronische Schnittstelle umfassen, über die die Ringbeleuchtungsvorrichtung (07) elektrisch mit dem Mikroskopobjektiv (01) koppelbar ist.

7. Ringbeleuchtungsvorrichtung (07) nach einem der Ansprüche 1 bis 6, wobei der Beleuchtungsring (17) aus einem wärmeleitenden Material gefertigt ist.

8. Mikroskopobjektiv (01), welches eine Ringbeleuchtungsvorrichtung (07) nach einem der vorhergehenden Ansprüche umfasst, die an einer Objektivhülse (29) angeordnet und mit dieser elektrisch und mechanisch gekoppelt ist.

## Claims

1. Ring illumination apparatus (07) for a microscope objective (01), comprising at least two light-emitting diode units (11), which are accommodated in an illumination ring (17), wherein the ring illumination apparatus (07) has at least one lower entry opening (08) and at least one upper exit opening (09) for cooling air for cooling the light-emitting diode units (12), **characterized in that** the illumination ring (17) has a second entry opening (18) and a second exit opening (19), and **in that** the light-emitting diode units (11) are arranged in each case in a collector housing (16) held in the illumination ring (17), wherein the collector housing (16) has a third entry opening (21) and a third exit opening (22).

2. Ring illumination apparatus (07) according to Claim 1, wherein the collector housing (16) is substantially cylindrical, wherein a collector lens (13) is arranged on a bottom of the cylinder shape and wherein the third entry opening (21) is provided at a lateral surface of the cylinder shape and the third exit opening (22) is provided at a lid of the cylinder shape.

3. Ring illumination apparatus (07) according to one of Claims 1 to 2, wherein the light-emitting diode unit (11) comprises a heat sink (34).

4. Ring illumination apparatus (07) according to one of Claims 1 to 3, which furthermore comprises a covering ring (23) for retaining the light-emitting diode units (11) in the illumination ring (17), wherein the covering ring (23) at least regionally surrounds the illumination ring (17) and has an axial periphery (26) and a radial periphery (27).

5. Ring illumination apparatus (07) according to Claim 4, wherein the axial periphery (26) projects beyond the second exit opening (19) of the illumination ring (17) in the direction of the objective extent, but a radial separation forming the upper exit opening (09) is located between the covering ring (23) and the illumination ring (17) in the region of the upper exit opening (09).

6. Ring illumination apparatus (07) according to one of Claims 1 to 5, wherein the light-emitting diode units (11) comprise an electronic interface, via which the ring illumination apparatus (07) is electrically couplable to the microscope objective (01).

7. Ring illumination apparatus (07) according to one of Claims 1 to 6, wherein the illumination ring (17) is manufactured from a thermally conductive material.

8. Microscope objective (01) comprising a ring illumination apparatus (07) according to one of the preceding claims, which illumination apparatus (07) is arranged at an objective sleeve (29) and is electrically and mechanically coupled thereto.

## Revendications

1. Dispositif d'éclairage annulaire (07) destiné à un objectif de microscope (01), ledit dispositif comprenant au moins deux unités de diodes électroluminescentes (11) qui sont reçues dans un anneau d'éclairage (17), le dispositif d'éclairage annulaire (07) comportant au moins une ouverture d'entrée inférieure (08) et au moins une ouverture de sortie supérieure (09) destinées à l'air de refroidissement pour le refroidissement des unités de diodes électroluminescentes (12), **caractérisé en ce que** l'anneau d'éclairage (17) comporte une deuxième ouverture d'entrée (18) et une deuxième ouverture de sortie (19), et **en ce que** les unités de diodes électroluminescentes (11) sont disposées chacune dans un boîtier collecteur (16) maintenu dans l'anneau d'éclairage (17), le boîtier collecteur (16) comportant une troisième ouverture d'entrée (21) et une troisième ouverture de sortie (22).

2. Dispositif d'éclairage annulaire (07) selon la revendication 1, le boîtier collecteur (16) étant sensiblement de forme cylindrique, une lentille collectrice (13) étant disposée sur un fond de la forme cylindrique et la troisième ouverture d'entrée (21) étant prévue sur une surface latérale de la forme cylindrique et la troisième ouverture de sortie (22) étant prévue sur un couvercle de la forme cylindrique.

3. Dispositif d'éclairage annulaire (07) selon l'une des revendications 1 à 2, l'unité de diodes électroluminescentes (11) comprenant un dissipateur thermique (34).

4. Dispositif d'éclairage annulaire (07) selon l'une des revendications 1 à 3, qui comprend en outre un anneau de recouvrement (23) destiné à maintenir les unités de diodes électroluminescentes (11) dans l'anneau d'éclairage (17), l'anneau de recouvrement (23) entourant au moins par portions l'anneau d'éclairage (17) et comportant un bord axial (26) et un bord radial (27).

5. Dispositif d'éclairage annulaire (07) selon la revendication 4, le bord axial (26) faisant saillie de la deuxième ouverture de sortie (19) de l'anneau d'éclairage (17) dans la direction d'extension de l'objectif, mais une distance radiale, qui forme l'ouverture de sortie supérieure (09), étant ménagée entre l'anneau de recouvrement (23) et l'anneau d'éclairage (17) dans la zone de l'ouverture de sortie supérieure (09).

6. Dispositif d'éclairage annulaire (07) selon l'une des revendications 1 à 5, les unités de diodes électroluminescentes (11) comprenant une interface électronique permettant de coupler électriquement le dispositif d'éclairage annulaire (07) à l'objectif de microscope (01).

7. Dispositif d'éclairage annulaire (07) selon l'une des revendications 1 à 6, l'anneau d'éclairage (17) étant fabriqué à partir d'un matériau thermiquement conducteur.

8. Objectif de microscope (01), qui comprend un dispositif d'éclairage annulaire (07) selon l'une des revendications précédentes, qui est disposé sur une douille d'objectif (29) et qui est couplé électriquement et accouplé mécaniquement à celle-ci.
